# FASCICULE DE BREVET EUROPEEN

(11) **EP 2 515 722 B1**
(45) Date de publication et mention de la délivrance du brevet: **16.04.2014**
(21) Numéro de dépôt: 10808910.3
(22) Date de dépôt: 21.12.2010
(51) Int. Cl.: A47J 27/08, F16J 15/06, A47J 27/04

(54) **JOINT POUR APPAREIL DE CUISSON D'ALIMENTS ET APPAREIL POURVU D'UN TEL JOINT**
DICHTUNG FÜR EIN GARGERÄT FÜR LEBENSMITTEL UND GERÄT MIT DERARTIGER DICHTUNG
SEAL FOR A FOOD-COOKING APPLIANCE AND APPLIANCE PROVIDED WITH SUCH A SEAL

(30) Priorité: 23.12.2009 FR 0959553
(43) Date de publication de la demande: 31.10.2012
(73) Titulaire: SEB S.A., 69130 Ecully (FR)
(72) Inventeur: CHAMEROY, Eric, F-21260 Veronnes (FR); CARTIGNY, Michel, Pierre, F-21310 Mirebeau Sur Beze (FR)
(74) Mandataire: Martin, Didier Roland Valéry
(86) Numéro de dépôt international: PCT/FR2010/052856
(87) Numéro de publication internationale: WO 2011/077036

(56) Documents cités:
- EP-A1- 0 684 001
- WO-A1-01/43605
- DE-U1-202008 011 482
- US-A- 2 399 115

## Description

### DOMAINE TECHNIQUE

La présente invention se rapporte au domaine technique général des appareils de cuisson d'aliments sous pression dans une atmosphère chargée en vapeur, par exemple aux appareils dénommés cuiseurs-vapeur ou autocuiseurs, et plus particulièrement aux joints d'étanchéité destinés à être mis en place dans de tels appareils pour assurer, en fonctionnement, l'étanchéité entre l'intérieur et l'extérieur de l'appareil.

La présente invention concerne ainsi un joint d'étanchéité pour appareil de cuisson d'aliments sous pression, ledit appareil comportant :
- une cuve sur laquelle est destiné à être rapporté un couvercle,
- un joint d'étanchéité interposé entre la cuve et le couvercle pour assurer l'étanchéité de l'appareil,
- des moyens de centrage destinés à assurer le centrage relatif du joint vis-à-vis de la cuve et du couvercle.

La présente invention concerne également un appareil de cuisson d'aliments sous pression équipé ou susceptible d'être équipé d'un joint d'étanchéité conforme à l'invention.

La présente invention concerne également un joint à lèvres en V pour appareil de cuisson sous pression, ledit joint étant destiné à être monté dans le couvercle d'un appareil de cuisson de manière à pouvoir assurer, en fonctionnement, l'étanchéité entre ledit couvercle et la cuve de l'appareil de cuisson, ledit joint comportant de plus, une couronne périphérique.

### TECHNIQUE ANTERIEURE

Quel que soit le type d'appareil de cuisson d'aliments sous pression concerné, qu'il s'agisse par exemple et de manière non limitative, d'autocuiseurs à étrier, à baïonnettes, à mâchoires ou à couvercle rentrant, il est déjà connu d'avoir recours à un joint d'étanchéité, par exemple en matériau élastomère, pour assurer l'étanchéité de l'appareil de cuisson.

Un joint selon l'art antérieur est par exemple décrit dans le document US 2399115 A.

Un tel joint est généralement disposé dans le couvercle à l'aide de moyens appropriés de telle sorte que lors de la mise en place du couvercle sur la cuve de l'appareil, le joint puisse venir en appui contre la cuve et assurer l'étanchéité entre l'intérieur et l'extérieur de l'enceinte de cuisson lors de la montée en pression de l'appareil et ce pendant toute la durée du cycle de cuisson.

On connaît ainsi par exemple les joints « *type corde* » qui sont utilisés dans les autocuiseurs à étriers. On connaît également les joints « *à lèvres* » formant généralement un U et qui diffèrent essentiellement par la position des lèvres au sein de l'appareil. Il existe ainsi un premier type de joints à lèvres, comportant des lèvres symétriques ou non, les lèvres étant généralement sensiblement parallèles l'une à l'autre et disposées dans un plan horizontal au sein du couvercle lorsque le joint sont mis en place dans le couvercle. On connaît également un second type de joint à lèvres comportant des lèvres symétriques ou non dont la mise en place au sein du couvercle conduit à une position sensiblement verticale des lèvres, ces dernières étant généralement parallèles entre elles.

Dans tous les cas la mise en place du couvercle sur la cuve conduit à une mise en compression de la ou des lèvres du joint en vue d'assurer l'étanchéité de l'appareil et permettre sa montée en pression, et son fonctionnement.

Bien que donnant généralement satisfaction, ces joints souffrent d'un certain nombre d'inconvénients. Ainsi, il s'avère en particulier que leur mise en place est souvent difficile alors même que la mise en place précise et convenable du joint conditionne souvent le bon fonctionnement de l'autocuiseur, et en particulier sa montée en pression, voire sa sécurité. Il n'est en effet pas rare qu'une mauvaise mise en place du joint conduise à un défaut d'étanchéité entre le couvercle et la cuve générant une fuite et un défaut de montée en pression de l'appareil, voire une projection de fluide vers l'extérieur.

Par ailleurs, il s'avère qu'en plus de la difficulté de mettre en place de manière précise le joint dans le couvercle, les systèmes connus souffrent d'un inconvénient supplémentaire résultant de la nécessité de prévoir un système de centrage du couvercle sur la cuve.

Les systèmes de centrage sont en effet nécessaires pour permettre au joint d'occuper une position précise et préétablie entre la cuve et le couvercle, un centrage parfaitement précis du couvercle sur la cuve permettant au joint d'exprimer pleinement les diverses fonctions d'étanchéité pour lesquelles il a été conçu.

Or, on constate que les systèmes d'aide à la mise en place du joint sur le couvercle et les systèmes d'aide au centrage du couvercle sur la cuve perturbent en réalité la mise en place du joint et surtout nécessitent la mise en oeuvre de moyens de fabrication complexes et onéreux. En effet, on a généralement recours, pour les joints à lèvres disposés horizontalement, à la réalisation de crevés ou perçages sur le bord du couvercle pour faciliter la mise en place du joint et le centrage du couvercle sur la cuve, les crevés ou perçages faisant alors office de butée et d'éléments de repères.

Ces éléments gênent la mise en place du joint et peuvent même conduire à un défaut de positionnement par l'utilisateur. Enfin, ils nécessitent des outils industriels appropriés, une organisation de la chaîne de fabrication adaptée et un processus de vérification des pièces spécifique. Pour les joints à lèvres disposés verticalement, on a par exemple recours à un roulage du bord intérieur du couvercle ce qui complique la fabrication du couvercle et nécessite une technologie spécifique. En définitive, les solutions techniques actuellement disponibles ne donnent pas pleinement satisfaction et demandent à être améliorées.

### EXPOSE DE L'INVENTION

Les objets assignés à l'invention visent en conséquence à remédier aux différents inconvénients énumérés précédemment et à proposer un nouveau joint d'étanchéité pour appareil de cuisson d'aliments sous pression qui soit particulièrement simple à mettre en place et efficace tout en permettant un centrage du couvercle par rapport à la cuve de l'appareil.

Un autre objet de l'invention vise à proposer un nouveau joint d'étanchéité pour appareil de cuisson d'aliments sous pression dont l'étanchéité est améliorée à l'aide de moyens particulièrement simples et économiques.

Un autre objet de l'invention vise à proposer un nouveau joint d'étanchéité pour appareil de cuisson d'aliments sous pression dans lequel l'étanchéité est obtenue à l'aide d'efforts réduits.

Un autre objet assigné à l'invention vise à proposer un nouveau joint d'étanchéité pour appareil de cuisson d'aliments permettant d'améliorer la sécurité, en particulier à la surpression, même en cas de mauvaise utilisation.

Les objets assignés à l'invention sont atteints à l'aide d'un joint d'étanchéité pour appareil de cuisson d'aliments sous pression, ledit appareil comportant :
- une cuve sur laquelle est destiné à être rapporté un couvercle,
- un joint d'étanchéité interposé entre la cuve et le couvercle pour assurer l'étanchéité de l'appareil et son fonctionnement,
- des moyens de centrage destinés à assurer le centrage relatif du joint vis-à-vis de la cuve et du couvercle.
caractérisé en ce que le joint d'étanchéité comporte une couronne périphérique et une sous couronne périphérique s'étendant sous la couronne périphérique et la prolongeant et des moyens de centrage ménagés ou disposés dans le joint de telle manière que lesdits moyens de centrage puissent venir s'intercaler entre le couvercle et la cuve lors de la mise en place du couvercle sur la cuve pour former une butée de centrage, lesdits moyens de centrage étant formés par une pluralité de zones de sur-épaisseurs locales, situées sur la face interne de ladite sous-couronne périphérique et destinées à venir en contact avec la cuve.

### DESCRIPTIF SOMMAIRE DES DESSINS

D'autres objets et avantages de l'invention apparaîtront plus en détails à l'aide de la description qui suit, en référence aux dessins annexés donnés à titre d'exemples illustratifs et non limitatifs dans lesquels :
- La figure 1 représente, selon une vue en perspective, un exemple préférentiel de réalisation d'un joint d'étanchéité.
- La figure 2 représente, selon une vue en perspective partielle extraite de la Figure 1, un détail de réalisation d'un joint d'étanchéité.
- Les figures 3 et 4 représentent, selon des vues en coupe transversale prises respectivement selon les lignes III-III et IV-IV de la figure 1, les sections correspondantes d'un joint d'étanchéité.
- La figure 5 représente selon une vue en coupe transversale partielle un exemple de réalisation préférentielle d'un joint monté à l'intérieur d'un couvercle de cuiseur d'aliments sous pression.
- La figure 6 représente, selon une vue en coupe transversale partielle, un exemple de réalisation préférentielle de l'invention illustrant le positionnement d'un joint dans un appareil de cuisson d'aliments sous pression.
- Les figures 7 et 8 montrent, selon des coupes transversales partielles, le fonctionnement d'un joint en position anormale au sein d'un appareil de cuisson d'aliments sous pression.
- Les figures 9 et 10 illustrent; selon des vues en perspectives, un exemple de réalisation d'un joint d'étanchéité conforme à l'invention, respectivement selon des vues de dessus et de dessous.
- La figure 11 représente, selon une vue en coupe transversale partielle, le positionnement d'un joint identique à celui illustré aux figures 9 et 10 et conforme à l'invention.
- La figure 12 illustre, selon une vue en coupe transversale partielle, le positionnement d'un joint conforme à l'invention et illustré aux figures 9 et 10, selon une position anormale et inversée au sein d'un appareil de cuisson d'aliments sous pression.

### MEILLEURE MANIERE DE REALISER L'INVENTION

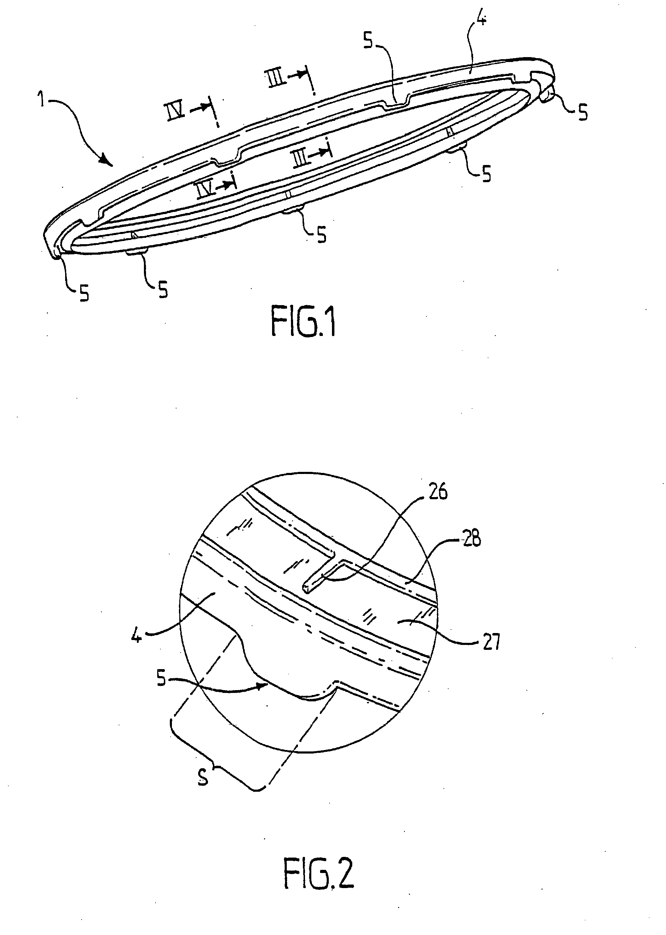

Les figures 1 à 8 illustrent un joint d'étanchéité 1 destiné à être monté et positionné dans un appareil de cuisson d'aliments sous pression, du genre cuiseur à vapeur ou autocuiseur comportant une cuve 2 sur laquelle est destiné à être rapporté un couvercle 3.

Tel que cela est bien connu, le joint 1 est réalisé à partir d'un matériau plastique déformable, du genre élastomère, et par exemple du silicone.

De manière également connue, l'appareil de cuisson d'aliments, par exemple un autocuiseur, est pourvu d'un dispositif de verrouillage/déverrouillage du couvercle 3 sur la cuve 2 non représenté aux figures. Le dispositif de verrouillage/déverrouillage peut être de tous types connus, et par exemple à étriers, à baïonnettes ou à mâchoires, l'autocuiseur pouvant également être du type à couvercle rentrant ou à trou d'homme sans que le type ou la nature du verrouillage conduisent à limiter la portée de l'invention.

L'appareil de cuisson d'aliments sous pression conforme à l'invention comporte également, de manière connue, l'ensemble des dispositifs de sécurité (non représentés aux figures) utiles et requis pour le fonctionnement en toute sécurité des appareils de ce type. Il comporte en particulier une ou plusieurs soupapes de sécurité à la surpression et de régulation, ainsi éventuellement que des systèmes de sécurité à l'ouverture de l'appareil.

Tel qu'illustré aux figures, le joint d'étanchéité 1 est interposé entre la cuve 2 et le couvercle 3 pour assurer l'étanchéité de l'appareil et son fonctionnement. Le joint 1 est en effet destiné à isoler de manière étanche l'intérieur de l'enceinte formée par la cuve 2 et le couvercle 3 de son environnement extérieur, et ce lorsque le couvercle 3 est mis en place sur la cuve et verrouillé, l'étanchéité procurée par le joint devant permettre la montée en pression de l'appareil de telle sorte qu'il puisse atteindre sa pression normale de fonctionnement et assurer un cycle de cuisson normal et complet.

Dans l'exemple illustré aux figures, le joint d'étanchéité 1 conforme à l'invention est préférentiellement de forme circulaire en vue de s'adapter à un appareil de cuisson d'aliments de forme conjuguée également circulaire, étant entendu que la forme géométrique générale du joint peut être différente, et par exemple de forme sensiblement ovale, carré ou autre pour s'adapter, le cas échéant, à la forme géométrique de l'appareil de cuisson d'aliments considéré.

Tel qu'illustré aux figures, l'appareil de cuisson d'aliments conforme à l'invention comporte des moyens de centrage 5 destinés à assurer le centrage relatif du joint 1 vis-à-vis de la cuve 2 et du couvercle 3.

Tel qu'illustré, le joint 1 conforme à l'invention se présente sous la forme générale d'un joint annulaire composé d'une couronne périphérique 4, par exemple de section sensiblement constante formant l'âme du joint 1 et dont l'une des fonctions essentielles est d'assurer l'étanchéité.

Le couvercle 3 est préférentiellement pourvu d'une zone centrale 3A bombée et surélevée se poursuivant radialement vers l'extérieur du couvercle 3 par un flanc tombé 6 se poursuivant lui-même par un plat annulaire 7 lui-même suivi d'un bord annulaire tombé 8, préférentiellement sensiblement plat et vertical, ce dernier se terminant par une extrémité terminale roulée 9 intérieurement. Le plat annulaire 7 définit ainsi avec le bord tombé 8 et l'extrémité terminale roulée 9 une gorge annulaire 10 dans laquelle est destinée à être logée la couronne périphérique 4 et les moyens de centrage 5. Bien évidemment, les dimensions respectives et les formes géométriques de la gorge annulaire 10 et de la couronne périphérique 4 et des moyens de centrage 5 sont appropriés et conjugués pour que le joint soit maintenu, l'étanchéité assurée et le centrage du couvercle 3 sur la cuve 2 obtenu.

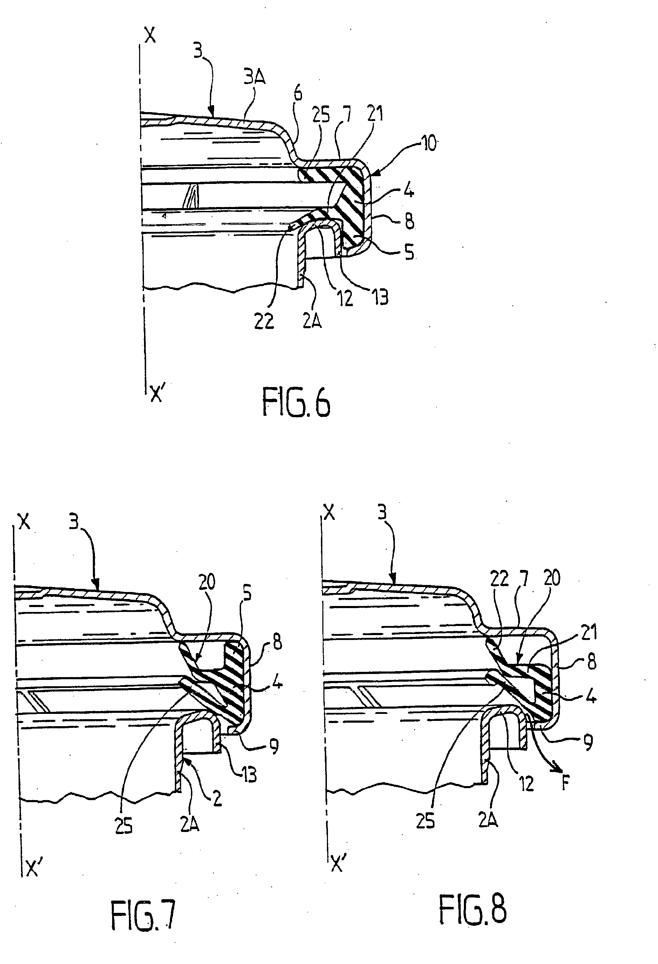

A cette fin, et selon la variante préférentielle de l'invention illustrée aux figures, et en particulier à la figure 6, la cuve 2 comporte des parois 2A s'élevant sensiblement verticalement à partir du fond (non représenté) de l'appareil, lesdites parois 2A se prolongeant vers leur extrémité supérieure par un bord de cuve 12 s'étendant sensiblement radialement vers l'extérieur en considération de l'axe de symétrie principal (X-X') de l'appareil. Avantageusement, le bord de cuve 12 est sensiblement plat et présente une légère inclinaison par rapport à l'horizontale tel que cela est illustré aux figures pour définir une forme légèrement conique tournée vers le centre de l'appareil. Il peut néanmoins être sensiblement horizontal sans sortir du cadre de l'invention. Avantageusement, le bord de cuve 12 se prolonge vers l'extérieur par un bord tombé 13 sensiblement vertical. Selon l'invention, les moyens de centrage 5 sont ménagés ou disposés dans le joint 1 de telle manière que lesdits moyens de centrage 5 puissent venir s'intercaler entre le couvercle 3 et la cuve 2 lors de la mise en place du couvercle sur la cuve 2 pour former une butée de centrage. Cette particularité permet au joint 1 de se caler en position sur sa périphérie interne et externe contre la cuve 2 et le couvercle 3.

Selon une première variante de réalisation non représentée aux figures, la couronne périphérique 4 peut être prolongée à sa partie inférieure par une sous-couronne sur toute sa périphérie formant les moyens de centrage 5 sur une hauteur constante. Dans cette variante, la hauteur totale de la section de la couronne périphérique et des moyens de centrage 5 correspond sensiblement à la hauteur du bord annulaire tombé 8, l'épaisseur des moyens de centrage 5 correspondant sensiblement par exemple à la largeur de l'extrémité terminale 9, ou avantageusement d'une épaisseur supérieure à ladite largeur de telle sorte que lors de la mise en place du couvercle 3 sur la cuve 2 et de son accostage, la partie basse et terminale du joint 1, en l'occurrence les moyens de centrage 5 vienne en butée, par leur face interne périphérique contre le bord tombé 13.

Selon une variante avantageuse de l'invention, le joint d'étanchéité 1 comporte donc une couronne périphérique 4 maintenue ou destinée à être maintenue dans la gorge annulaire 10 du couvercle 3, les moyens de centrage 5 s'étendant radialement à partir de ladite couronne périphérique 4 et sous cette dernière afin de pouvoir former un moyen de butée permettant le centrage relatif du couvercle 3 et de la cuve 2 tout en assurant un bon positionnement du joint 1.

Selon une version particulièrement avantageuse, et tel qu'illustré en particulier aux figures 1 à 6, il n'est pas nécessaire que les moyens de centrage 5 s'étendent sur une longueur périphérique identique à celle de la couronne périphérique 4 pour obtenir l'effet de centrage recherché. En d'autres termes, les moyens de centrage 5 s'étendent radialement à partir de la couronne périphérique 4 sur une portion de longueur le long de la couronne périphérique 4 de manière discontinue pour former une pluralité de secteurs S (figure 2) le long desquels la hauteur totale du joint 1 correspondra sensiblement à la hauteur totale de la gorge annulaire 10 pour permettre, au sein de ces secteurs S, une mise en butée de la face interne 4A des moyens de centrage 5 avec la cuve 2, avantageusement avec le bord tombé 13, pour obtenir un effet de centrage.

Tel qu'illustré, et selon une version avantageuse nullement limitative, le joint annulaire peut comprendre par exemple neuf secteurs S définissant neuf moyens de centrage 5 individuels.

Tel qu'illustré également aux figures, les moyens de centrage 5 sont avantageusement venus de matière avec la couronne périphérique 4 ou, à titre d'alternative (non représenté aux figures), rapportés sur ladite couronne périphérique 4. Il est en effet envisageable de prévoir une couronne périphérique 4 de hauteur constante sur sa périphérie (et inférieure à la hauteur du bord tombé 8) et de rapporter, par collage, insertion ou clipage voire tout moyen équivalent, des pièces distinctes du joint 1 et formant les moyens de centrage 5, et ce sans sortir du cadre de l'invention.

Avantageusement, le joint d'étanchéité 1 est pourvu d'une lèvre inférieure 20 s'étendant à partir de la couronne périphérique 4 et destinée à venir en appui étanche sur la cuve 2, avantageusement sur le bord de cuve 12, lors de la mise en place du couvercle 3.

De manière particulièrement avantageuse, la lèvre inférieure 20 a un profil géométrique adapté pour venir épouser avec un effort minimal mais suffisant le bord de cuve 12 pour réaliser une étanchéité optimale. A cette fin, et de manière avantageuse, la lèvre inférieure 20 comporte au moins une première portion 21 et au moins une deuxième portion 22 dans son prolongement, les deux portions étant inclinées relativement l'une par rapport à l'autre. On obtient ainsi l'effet recherché favorisant une bonne étanchéité par appui de la face interne de la lèvre inférieure 20 sur le bord de cuve avec une déformation minime vers l'intérieur de la lèvre inférieure 20, l'effort vertical de retenue à la fermeture du couvercle 3 étant ainsi également minimal.

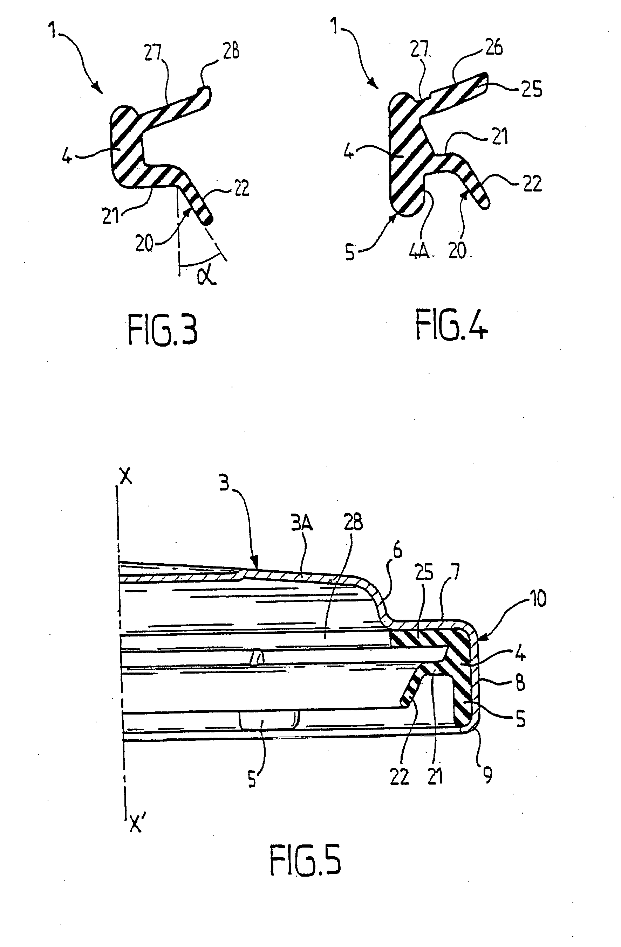

Selon une version particulièrement avantageuse, illustrée aux figures 3 et 4, la première portion 21 s'étend sensiblement horizontalement et radialement en direction du centre du couvercle 3 et de l'axe X-X' à partir de la couronne périphérique 4, lorsque le joint 1 est en position de repos dans le couvercle 3, ladite première portion 21 se prolongeant par la seconde portion 22 inclinée vers le fond de la cuve 2 (figure 5) d'un angle α (figure 3) de l'ordre de 35° par rapport à la verticale, et par exemple compris entre 0 et 60 degrés

Une telle disposition permet au joint de fournir une excellente étanchéité entre la cuve et l'extérieur de l'appareil et ce avec un effort de retenue à la fermeture du couvercle qui est minimal.

Le joint d'étanchéité conforme à l'invention comporte également avantageusement une lèvre supérieure 25 s'étendant à partir de la couronne périphérique 4, sensiblement à partir de l'extrémité supérieure de ladite couronne périphérique 4, ladite lèvre supérieure 25 étant destinée à venir en appui étanche contre le couvercle 3. Plus particulièrement, et tel qu'illustré aux figures, la lèvre supérieure 25 est conformée et de longueur telle qu'elle vient en appui étanche contre la face interne du plateau annulaire 7 et de manière préférentielle sensiblement sur toute sa longueur. L'étanchéité entre le couvercle 3 et l'extérieur de l'appareil est ainsi assurée de manière particulièrement efficace.

De manière avantageuse, la lèvre supérieure 25 est pourvue d'une pluralité de nervures 26 (figure 2) s'étendant selon une direction sensiblement radiale en considération de l'axe (X-X'), lesdites nervures 26 étant espacées, régulièrement ou non, les unes des autres, lesdites nervures 26 faisant saillie sur la face supérieure 27 de ladite lèvre-supérieure destinée à venir en contact avec le couvercle 3, en particulier avec la face interne du plat annulaire 7. Les nervures 26 forment d'une part un repère visuel facilitant le repérage de l'orientation du joint 1 ce qui facilite son bon positionnement dans la gorge annulaire 10 par l'utilisateur et d'autre part un moyen favorisant la fuite d'air en cas de positionnement anormal, en particulier à l'envers, du joint 1.

Tel qu'illustré à la figure 2, les nervures 26 peuvent être situées sensiblement à l'aplomb des secteurs S comportant les moyens de centrage 5, et de préférence au centre. A titre de variante préférentielle (non représentée aux figures), les nervures 26 sont ménagées sur la lèvre supérieure 25 entre deux moyens de centrage 5 adjacents.

A titre de variante non représentée aux figures, la lèvre supérieure 25 peut, à la place des nervures 26 ou en plus desdites nervures comporter des rainures sensiblement radiales ménagées dans l'épaisseur de la lèvre supérieure 25 de manière à créer une surface de contact irrégulière avec la face interne du couvercle.

Ainsi, la lèvre supérieure 25 est pourvue sur sa surface d'une pluralité de conformations sensiblement radiales, du genre nervures ou rainures, espacées les unes des autres, lesdites conformations ménageant des espaces sur la face supérieure de la lèvre supérieure 25 en contact avec le couvercle.

De manière avantageuse, la lèvre supérieure 25 comporte à son extrémité terminale libre opposée à la couronne périphérique 4 une excroissance ou un bourrelet 28, formant par exemple un tore, pour favoriser l'étanchéité entre la lèvre supérieure 25 et le couvercle 3.

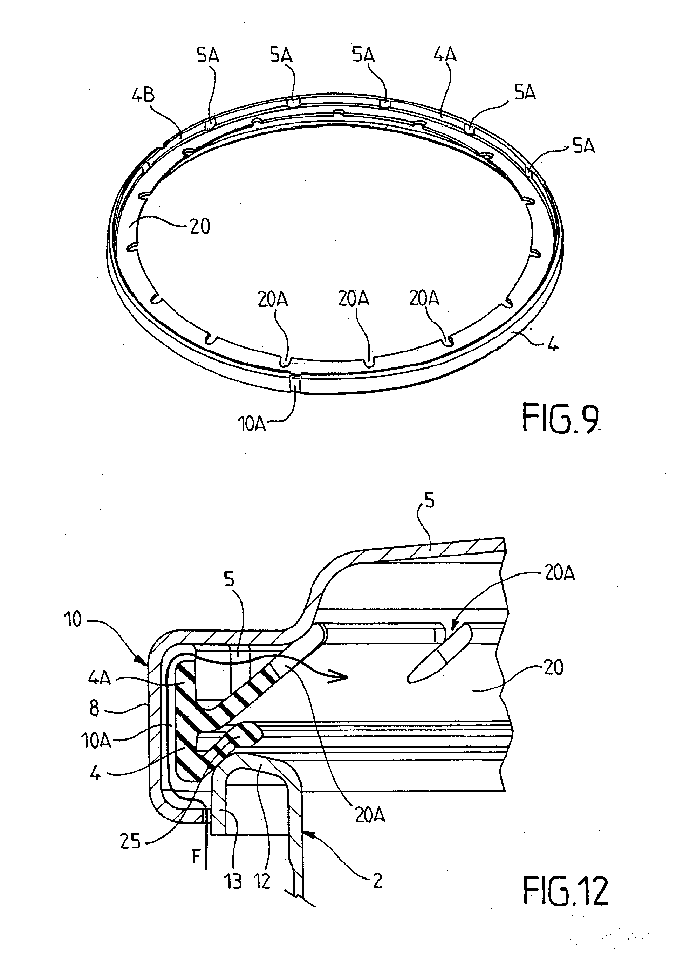

Selon une variante de réalisation préférentielle et conforme à l'invention, et illustrée aux figures 9 à 12, le joint comporte une sous-couronne périphérique 4A s'étendant sous la couronne périphérique 4 et la prolongeant. Tel qu'illustré, la sous-couronne périphérique 4A prolonge la couronne périphérique 4 au droit de cette dernière de manière que la couronne périphérique 4 et la sous-couronne périphérique 4A forment, de manière préférentielle, deux couronnes sensiblement superposées et situées dans le prolongement l'une de l'autre et dont les faces extérieures sont parallèles.

Par rapport au joint décrit aux figures 1 à 6, la variante décrite aux figures 9 à 12 est également caractérisée en ce que la pluralité de secteurs S, correspondant aux moyens de centrage de l'invention, est formée par une pluralité de zones de sur-épaisseurs locales 5A situées sur la face interne 4B de ladite sous-couronne périphérique 4A et destinées à venir en contact avec la cuve 2. Les zones de sur-épaisseurs locales 5A forment ainsi des zones de sur-épaisseurs radiales dirigées vers le centre de la cuve 2 et s'étendant dans cette direction à partir de la face interne 4B faisant face au centre de ladite cuve 2.

Les zones de sur-épaisseurs locales 5A sont réparties angulairement de manière sensiblement régulière le long de la périphérie du joint, et sont par exemple au nombre de 10 à 14.

Bien évidemment, les zones de sur-épaisseurs locales 5A peuvent être venues de matière avec la sous-couronne périphérique 4A ou être rapportées sur ladite sous-couronne périphérique 4A par tout moyens appropriés.

De manière préférentielle, les zones de sur-épaisseurs locales 5A sont formées par une série de dômes cylindriques illustrés à la figure 9 dont la base est solidaire de la face 4B.

L'invention concerne donc un joint à lèvres en V pour appareil de cuisson sous pression comportant une couronne périphérique 4 caractérisé en ce qu'il comporte des moyens de centrage s'étendant sous la couronne périphérique pour venir s'intercaler entre le couvercle 3 et la cuve 2 de l'appareil de cuisson lors de la mise en place du couvercle 3 sur la cuve 2 pour former une butée de centrage.. Le joint d'étanchéité 1 est avantageusement un joint à double lèvres non parallèles et orientées angulairement entre elles pour former au repos un V dissymétrique à partir de la couronne périphérique 4 favorisant une bonne étanchéité avec un effort minimal. Dans sa position de fonctionnement, les lèvres 20 et 26 du joint en V conforme à l'invention sont sensiblement parallèles au fond de la cuve 2 de l'appareil, c'est à dire sensiblement horizontales.

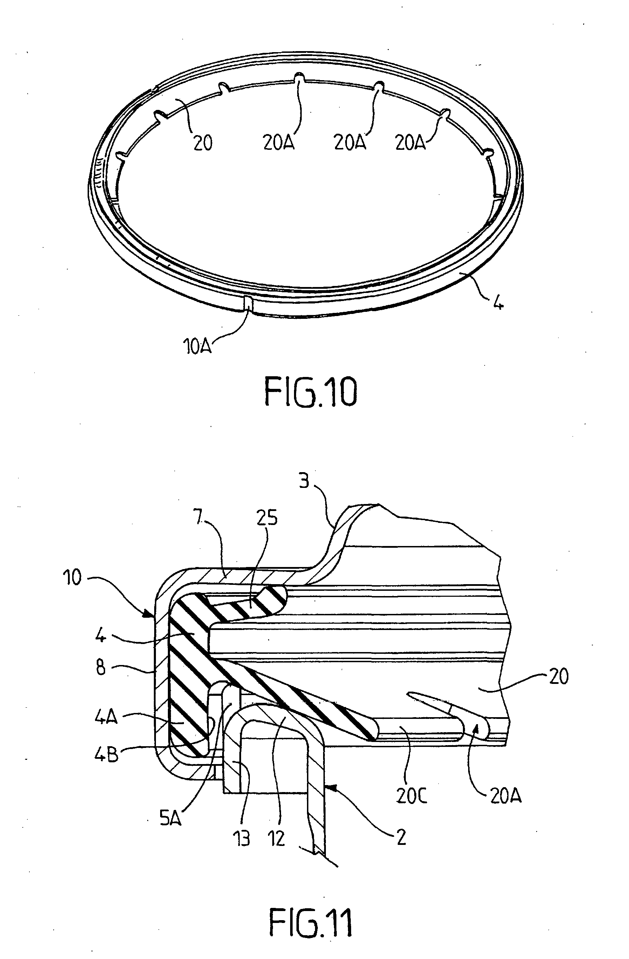

Dans le cadre de la variante de réalisation préférentielle de l'invention illustrée aux figures 9 à 12, le joint à lèvres en V selon l'invention comprend une sous-couronne périphérique 4A tel que décrit précédemment avec des zones de sur-épaisseurs locales et une lèvre inférieure 20 pourvue d'une pluralité d'encoches 20A ménagées à travers l'épaisseur de ladite lèvre inférieure 20 à partir de l'extrémité distale 20C de ladite lèvre inférieure 20. Les encoches 20A permettent un fluage du joint (figure 11) en cas de déformation du couvercle 3 dans les secteurs périphériques du couvercle 3 s'étendant entre deux mâchoires adjacentes, secteurs périphériques dans lesquelles le couvercle n'est pas retenu par les mâchoires.

En cas de surpressions anormales et de disfonctionnement de l'appareil, les encoches 20A permettent de générer une fuite de vapeur à travers leur section et à travers une zone de fuite ménagée entre le bord de cuve et les secteurs cylindriques du couvercle non retenus par deux mâchoires adjacentes. La zone de fuite se poursuit par un ou plusieurs évidement(s) 10A réalisé(s) dans l'épaisseur de la couronne périphérique 4 et dans la sous couronne périphérique 4A et sur toute leurs hauteurs (figures 9 et 12). Ces évidements ont pour fonction d'éviter le montage inversé du joint au sein du couvercle 2.

Les encoches 20A de fluage évitent ainsi au joint de s'échapper du bord de cuve, voire d'être extrudé.

Le joint à lèvre en V selon l'invention est caractérisé en ce qu'il comporte une sous couronne périphérique 4A s'étendant sous la couronne périphérique 4 et la prolongeant et en ce que les moyens de centrage 5A sont formée par une pluralité de zones de sur épaisseurs locales 5A, situées sur la face interne 4B de ladite sous-couronne périphérique et destinée à venir en contact avec la cuve.

L'invention concerne un joint à lèvres en V pour appareil de cuisson sous pression comportant une couronne périphérique 4 et des moyens de centrage 5, 5A destinés à assurer le centrage relatif du joint 1 vis-à-vis de la cuve 2 et du couvercle 3 de l'appareil de cuisson caractérisé en ce qu'il comporte une sous couronne périphérique 4A s'étendant sous la couronne périphérique 4 et la prolongeant et en ce que les moyens de centrage 5A sont formée par une pluralité de zones de sur-épaisseurs locales 5A, situées sur la face interne 4B de ladite sous-couronne périphérique 4A et destinées à venir en contact avec la cuve pour former une butée de centrage.

Le joint est caractérisé en ce que les sur-épaisseurs locales 5A sont formées par des dômes cylindriques.

Les caractéristiques géométriques et dimensionnelles du joint d'étanchéité 1 conforme à l'invention permettent par conséquent de le mettre en place facilement et sans risque de positionnement défectueux, au sein de la gorge annulaire 10, ledit joint restant à l'intérieur du couvercle 3 grâce à son diamètre extérieur proche du diamètre intérieur du couvercle 3. Le maintien à l'intérieur de la gorge annulaire 10 est également favorisé par la hauteur combinée de la couronne périphérique 4 et des moyens de centrage 5, disposés sur la sous-couronne périphérique 4A, laquelle hauteur combinée permet au joint 1 d'épouser parfaitement le volume de la gorge annulaire 10 (figure 5).

Une fois en place, la lèvre supérieure 25, et en particulier le bourrelet 28 formant tore, vient coopérer avec la face inférieure du couvercle 3 et assurer de manière précise l'étanchéité entre l'intérieur et l'extérieur de l'appareil, au niveau du couvercle.

Lors de la fermeture et du verrouillage du couvercle 3 sur la cuve 2, les moyens de centrage 5 viennent coopérer avec l'extérieur du bord de la cuve 2 pour assurer un centrage entre le couvercle 3 et la cuve 2 tout en induisant un excellent positionnement du joint d'étanchéité 1 sur toute sa périphérie par rapport à ces deux pièces.

Lors de la mise en place du couvercle 3, la lèvre inférieure 20 vient naturellement en appui sur le bord de cuve 12 avec une déformation minimale permettant une fermeture particulièrement facile de l'appareil sans pour autant réduire l'étanchéité entre la cuve et l'extérieur de l'appareil.

Ainsi, l'ensemble des géométries retenues pour les pièces venant en contact l'une de l'autre permet un excellent centrage du couvercle 3 tout en permettant de minimiser les efforts nécessaires pour que l'appareil soit correctement fermé, verrouillé et étanche.

Le joint 1 conforme à l'invention procure également des avantages lors de l'ouverture de l'appareil.

Le joint d'étanchéité 1 conforme à l'invention est également particulièrement avantageux dans la mesure où il est.conçu pour générer une fuite d'air importante de l'appareil dans l'hypothèse où son positionnement aurait été défectueux et en particulier inversé tel que cela est illustré aux figures 7 et 8.

Dans ces figures, le joint 1 a été mis en place dans la gorge périphérique 10 en position inversée, la lèvre supérieure 25 venant en appui contre le bord de cuve 12 lorsque l'appareil n'est pas en fonctionnement (figure 7) c'est à dire que la pression régnant à l'intérieur de l'appareil est sensiblement équivalente à celle de la pression atmosphérique.

On remarque tout d'abord que dans une telle hypothèse de disfonctionnement, les efforts de fermeture de l'appareil sont importants dans la mesure où il faut vaincre les efforts résultant du mauvais positionnement des lèvres 20, 26 du joint et en particulier de la lèvre 25 dont l'élasticité s'oppose au bon accostage du couvercle 3 sur la cuve.

En outre, on constate que les nervures 26 viennent en appui avec le bord de cuve 12 ce qui permet de laisser libre un espace de fuite important ménagé entre les différentes nervures 26 et la face supérieure 27 d'une part et le bord de cuve 12 d'autre part. L'espace de fuite important ainsi créé permet de générer corrélativement une fuite F (figure 8) importante empêchant toute montée en pression de l'appareil et procurant ainsi une sécurité importante pour l'utilisateur en cas de défaut de positionnement du joint.

Le joint selon l'invention décrit aux figures 9 à 12 est également particulièrement avantageux en cas de positionnement défectueux ou inversé du joint conforme à l'invention.

Tel qu'illustré à la figure 12, la mise en place, par inadvertance, du joint conforme à l'invention en position inversée conduirait à générer un chemin de fuite naturel F (figure 12) résultant des encoches de fluage 20A en appui contre la face interne du couvercle 3 et des évidements 10A ménagés à la périphérie externe du joint formant son talon en regard de la gorge annulaire 10 sur sa hauteur totale, c'est-à-dire sur la hauteur de la couronne périphérique 4 et de la sous-couronne périphérique 4A.

Grâce à cette particularité technique, il est possible d'assurer une fuite naturelle entre le talon du joint et le couvercle 2, puis à travers les encoches 20 A de telle sorte que l'appareil ne peut monter en pression en cas de positionnement inversé ou anormal du joint conforme à l'invention.

### POSSIBILITE D'APPLICATION INDUSTRIELLE

L'invention trouve son application industrielle dans la fabrication d'appareils électroménagers, en particulier d'autocuiseurs.

## Revendications

1. Joint (1) d'étanchéité pour appareil de cuisson d'aliments sous pression, ledit appareil comportant :
- une cuve (2) sur laquelle est destiné à être rapporté un couvercle (3),
- un joint (1) d'étanchéité interposé entre la cuve (2) et le couvercle (3) pour assurer l'étanchéité de l'appareil en fonctionnement,
- des moyens de centrage (5, 5A) destinés à assurer le centrage relatif du joint (1) vis-à-vis de la cuve (2) et du couvercle (3),
**caractérisé en ce que** le joint (1) d'étanchéité comporte une couronne périphérique (4) et une sous couronne périphérique (4A) s'étendant sous la couronne périphérique (4) et la prolongeant et des moyens de centrage (5, 5A) ménagés ou disposés dans le joint (1) de telle manière que lesdits moyens de centrage (5) puissent venir s'intercaler entre le couvercle (3) et la cuve (2) lors de la mise en place du couvercle (3) sur la cuve (2) pour former une butée de centrage, lesdits moyens de centrage étant formés par une pluralité de zones de sur-épaisseurs locales (5A), situées sur la face interne (4B) de ladite sous-couronne périphérique (4A) et destinées à venir en contact avec la cuve (2).

2. Joint (1) selon la revendication 1 **caractérisé en ce que** les sur-épaisseurs locales (5A) sont formées par des dômes cylindriques.

3. Joint (1) selon l'une des revendications 1 ou 2 **caractérisé en ce que** les moyens de centrage (5) sont venus de matière avec la couronne périphérique (4) ou rapportés sur ladite couronne périphérique (4).

4. Joint (1) selon l'une des revendications 2 à 3 **caractérisé en ce que** le joint (1) d'étanchéité est pourvu d'une lèvre inférieure (20) s'étendant à partir de la couronne périphérique (4) et destinée à venir en appui étanche sur le bord de cuve (12) lors de la mise en place du couvercle (3).

5. Joint (1) selon la revendication 4 **caractérisé en ce que** la lèvre inférieure (20) comporte au moins une première portion (21) et au moins une deuxième portion (22) dans son prolongement, les deux portions (21, 22) étant inclinées relativement l'une par rapport à l'autre.

6. Joint (1) selon la revendication 5 **caractérisé en ce que** la première portion (21) s'étend sensiblement horizontalement en direction du centre du couvercle (3) à partir de la couronne périphérique (4), ladite première portion (21) se prolongeant par une seconde portion (22) inclinée vers le fond de la cuve (2) d'un angle a par rapport à la verticale, par exemple compris entre 0 et 60 degrés.

7. Joint (1) selon l'une des revendications 4 à 6 **caractérisé en ce que** la lèvre inférieure (20) est pourvue d'une pluralité d'encoches (20A) ménagées à travers l'épaisseur de ladite lèvre inférieure (20), à partir de l'extrémité distale (20C) de ladite lèvre inférieure, et d'évidements (10A) ménagés à la périphérie externe du joint sur toute sa hauteur.

8. Joint (1) selon l'une des revendications 2 à 7 **caractérisé en ce que** le joint (1) comporte une lèvre supérieure (25) s'étendant à partir de la couronne périphérique (4) et destinée à venir en appui étanche contre le couvercle (3).

9. Joint (1) selon la revendication 8 **caractérisé en ce que** la lèvre supérieure (25) est pourvue sur sa surface d'une pluralité de conformations sensiblement radiales, du genre nervures ou rainures, espacées les unes des autres, lesdites conformations ménageant des espaces sur la face supérieure de la lèvre supérieure (25) en contact avec le couvercle (3).

10. Joint (1) selon la revendication 8 ou 9 **caractérisé en ce que** la lèvre supérieure (25) comporte à son extrémité terminale une excroissance (28), formant par exemple un tore, pour favoriser l'étanchéité entre la lèvre supérieure (25) et le couvercle (3).

11. Joint (1) selon l'une des revendications précédentes **caractérisé en ce qu'**il est constitué par un joint à lèvres en V.

12. Appareil de cuisson d'aliments sous pression équipé d'un joint (1) d'étanchéité conforme à l'une des revendications 1 à 11.

13. Appareil de cuisson d'aliments sous pression selon la revendication 12 **caractérisé en ce que** l'appareil est un cuiseur vapeur ou un autocuiseur.

## Patentansprüche

1. Dichtung (1) für Druckgargerät für Lebensmittel, wobei das Gerät Folgendes aufweist:
- einen Behälter (2), auf dem ein Deckel (3) aufzusetzen ist,
- eine Dichtung (1), die zwischen den Behälter (2) und den Deckel (3) eingefügt ist, um die Abdichtung des Geräts beim Betrieb sicherzustellen,
- Zentriermittel (5, 5A), die dazu bestimmt sind, das relative Zentrieren der Dichtung (1) zu dem Behälter (2) und dem Deckel (3) sicherzustellen,
**dadurch gekennzeichnet, dass** die Dichtung (1) einen peripheren Kranz (4) und einen peripheren Unterkranz (4A), der sich unter dem peripheren Kranz (4) erstreckt und ihn verlängert, aufweist, und Zentriermittel (5, 5A), die in der Dichtung (1) derart eingerichtet oder angeordnet sind, dass sich die Zentriermittel (5) zwischen den Deckel (3) und den Behälter (2) beim Anbringen des Deckels (3) auf dem Behälter (2) einfügen können, um einen Zentrieranschlag zu bilden, wobei die Zentriermittel aus einer Vielzahl lokaler Überdicken (5A) gebildet sind, die auf der Innenseite (4B) des peripheren Unterkranzes (4A) liegen und dazu bestimmt sind, mit dem Behälter (2) in Berührung zu kommen.

2. Dichtung (1) nach Anspruch 1, **dadurch gekennzeichnet, dass** die lokalen Überdicken (5A) durch zylindrische Kuppen gebildet sind.

3. Dichtung (1) nach einem der Ansprüche 1 oder 2, **dadurch gekennzeichnet, dass** die Zentriermittel (5) aus einem Stück mit dem peripheren Kranz (4) bestehen oder auf den peripheren Kranz (4) angebaut sind.

4. Dichtung (1) nach einem der Ansprüche 2 bis 3, **dadurch gekennzeichnet, dass** die Dichtung (1) mit einer unteren Lippe (20) versehen ist, die sich ausgehend von dem peripheren Kranz (4) erstreckt und dazu bestimmt ist, beim Anbringen des Deckels (3) in dichte Auflage auf dem Behälterrand (12) zu kommen.

5. Dichtung (1) nach Anspruch 4, **dadurch gekennzeichnet, dass** die untere Lippe (20) mindestens einen ersten Teil (21) und mindestens einen zweiten Teil (22) in seiner Verlängerung aufweist, wobei die zwei Teile (21, 22) in Bezug zueinander geneigt sind.

6. Dichtung (1) nach Anspruch 5, **dadurch gekennzeichnet, dass** sich der erste Teil (21) im Wesentlichen horizontal in Richtung der Mitte des Deckels (3) ausgehend von dem peripheren Kranz (4) erstreckt, wobei sich der erste Teil (21) durch einen zweiten Teil (22), der zu dem Boden des Behälters (2) um einen Winkel α in Bezug auf die Senkrechte geneigt ist, der zum Beispiel zwischen 0 und 60° liegt, verlängert.

7. Dichtung (1) nach einem der Ansprüche 4 bis 6, **dadurch gekennzeichnet, dass** die untere Lippe (20) mit einer Vielzahl von Kerben (20A) versehen ist, die durch die Stärke der unteren Lippe (20) ausgehend von dem distalen Ende (20C) der unteren Lippe eingerichtet sind, und mit Aussparungen (10A), die an der externen Peripherie der Dichtung auf ihrer gesamten Höhe eingerichtet sind.

8. Dichtung (1) nach einem der Ansprüche 2 bis 7, **dadurch gekennzeichnet, dass** die Dichtung (1) eine obere Lippe (25) aufweist, die sich ausgehend von dem peripheren Kranz (4) erstreckt und dazu bestimmt ist, in dichte Auflage gegen den Deckel (3) zu kommen.

9. Dichtung (1) nach Anspruch 8, **dadurch gekennzeichnet, dass** die obere Lippe (25) auf ihrer Oberfläche mit einer Vielzahl von in etwa radialen Ausbildungen des Typs Rippen oder Rillen versehen ist, die voneinander beabstandet sind, wobei die Ausbildungen Räume auf der oberen Seite der oberen Lippe (25) in Berührung mit dem Deckel (3) einrichten.

10. Dichtung (1) nach Anspruch 8 oder 9, **dadurch gekennzeichnet, dass** die obere Lippe (25) an ihrem Ende eine Ausstülpung (28) aufweist, die zum Beispiel einen Ring bildet, um die Abdichtung zwischen der oberen Lippe (25) und dem Deckel (3) zu begünstigen.

11. Dichtung (1) nach einem der vorhergehenden Ansprüche, **dadurch gekennzeichnet, dass** sie aus einer Dichtung mit V-Lippen besteht.

12. Druckgargerät für Lebensmittel, das mit einer Dichtung (1) gemäß einem der Ansprüche 1 bis 11 ausgestattet ist.

13. Druckgargerät für Lebensmittel nach Anspruch 12, **dadurch gekennzeichnet, dass** das Gerät ein Dampfgargerät oder ein Dampfdruckkochtopf ist.

## Claims

1. A sealing gasket (1) for a utensil for cooking food under pressure, said utensil comprising:
- a vessel (2) on which a lid (3) is designed to be mounted;
- a sealing gasket (1) interposed between the vessel (2) and the lid (3) for sealing the utensil when it is in operation; and
- centering means (5, 5A) designed to center the gasket (1) relative to the vessel (2) and to the lid (3);
said sealing gasket (1) being **characterized in that** it comprises a peripheral band (4) and a peripheral under-band (4A) extending under the peripheral band (4) and extending it, and centering means (5, 5A) provided in or disposed in the gasket (1) in such a manner that said centering means (5) can come to be interposed between the lid (3) and the vessel (2) while the lid (3) is being put into place on the vessel (2) so as to form a centering abutment, said centering means being formed by a plurality of local extra-thickness zones (5A), situated on the inside face (4B) of said peripheral under-band (4A) and designed to come into contact with the vessel (2).

2. The gasket (1) according to claim 1, **characterized in that** the local extra-thicknesses (5A) are formed by cylindrical domes.

3. A gasket (1) according to claim 1 or claim 2, **characterized in that** the centering means (5) are formed integrally with the peripheral band (4) or are secured to said peripheral band (4).

4. A gasket (1) according to claim 2 or claim 3, **characterized in that** the sealing gasket (1) is provided with a lower lip (20) extending from the peripheral band (4) and designed to come to bear in sealed manner against the vessel rim (12) while the lid (3) is being put into place.

5. A gasket (1) according to claim 4, **characterized in that** the lower lip (20) has at least a first portion (21) and at least a second portion (22) extending on from the first portion, the two portions (21, 22) being inclined relative to each other.

6. A gasket (1) according to claim 5, **characterized in that** the first portion (21) extends substantially horizontally towards the center of the lid (3) from the peripheral band (4), said first portion (21) being extended by a second portion (22) that is inclined towards the bottom of the vessel (2) at an angle α relative to the vertical, e.g. an angle lying in the range 0° to 60°.

7. A gasket (1) according to any one of claims 4 to 6, **characterized in that** the lower lip (20) is provided with a plurality of notches (20A) provided through the thickness of said lower lip (20), from the distal end (20C) of said lower lip, and recesses (10A) are provided in the outside periphery of the gasket over its entire height.

8. A gasket (1) according to any one of claims 2 to 7, **characterized in that** the sealing gasket (1) further comprises an upper lip (25) extending from the peripheral band (4) and designed to come into sealed abutment against the lid (3).

9. A gasket (1) according to claim 8, **characterized in that** the upper lip (25) is provided over its surface with a plurality of substantially radial shapes, of the rib or of the groove type, spaced apart from one another and forming gaps on the top face of the upper lip (25) in contact with the lid (3).

10. A gasket (1) according to claim 8 or claim 9, **characterized in that**, at its end segment, the upper lip (25) has a projection (28), e.g. forming an O-ring torus, for facilitating the sealing between the upper lip (25) and the lid (3).

11. A gasket (1) according to any one of the preceding claims, **characterized in that** it constitutes a V-shaped lip gasket.

12. A utensil for cooking food under pressure, which utensil is equipped with a sealing gasket (1) according to any one of claims 1 to 11.

13. A utensil for cooking food under pressure according to claim 12, **characterized in that** the utensil is a steam cooker or a pressure cooker.
